(19) Europäisches Patentamt
European Patent Office
Office européen des brevets

(11) **EP 1 802 894 B1**

(12) **EUROPÄISCHE PATENTSCHRIFT**

(45) Veröffentlichungstag und Bekanntmachung des Hinweises auf die Patenterteilung:
**31.10.2012  Patentblatt 2012/44**

(21) Anmeldenummer: **06724658.7**

(22) Anmeldetag: **29.04.2006**

(51) Int Cl.:
*F16G 13/12* (2006.01)    *F16G 15/12* (2006.01)
*C22C 38/44* (2006.01)    *C22C 38/02* (2006.01)
*C22C 38/04* (2006.01)    *C22C 38/06* (2006.01)

(86) Internationale Anmeldenummer:
**PCT/EP2006/004044**

(87) Internationale Veröffentlichungsnummer:
**WO 2007/009517 (25.01.2007 Gazette 2007/04)**

(54) **HOCHFESTE STAHLKETTE FÜR DEN TIEFTEMPERATURBEREICH**

HIGH-STRENGTH STEEL CHAIN FOR THE LOW TEMPERATURE RANGE

CHAINE EN ACIER HAUTE RESISTANCE POUR LES BASSES TEMPERATURES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.07.2005  DE 102005034140**

(43) Veröffentlichungstag der Anmeldung:
**04.07.2007  Patentblatt 2007/27**

(73) Patentinhaber: **RUD Ketten Rieger & Dietz GmbH u. Co. KG**
**73432 Aalen-Unterkochen (DE)**

(72) Erfinder: **SINZ, Rolf**
**D-73450 Heubach (DE)**

(74) Vertreter: **Grünecker, Kinkeldey, Stockmair & Schwanhäusser**
**Leopoldstrasse 4**
**80802 München (DE)**

(56) Entgegenhaltungen:
**EP-A- 1 561 833    CN-A- 1 281 906**
**US-A- 3 432 368    US-A- 4 680 926**

- **PATENT ABSTRACTS OF JAPAN Bd. 1998, Nr. 11, 30. September 1998 (1998-09-30) -& JP 10 168542 A (NIPPON STEEL CORP), 23. Juni 1998 (1998-06-23)**
- **PATENT ABSTRACTS OF JAPAN Bd. 2000, Nr. 25, 12. April 2001 (2001-04-12) -& JP 2001 234285 A (NIPPON STEEL CORP), 28. August 2001 (2001-08-28)**
- **PATENT ABSTRACTS OF JAPAN Bd. 016, Nr. 413 (C-0980), 2. September 1992 (1992-09-02) -& JP 04 141546 A (AICHI STEEL WORKS LTD), 15. Mai 1992 (1992-05-15)**

EP 1 802 894 B1

**Beschreibung**

**Technisches Gebiet**

Die Erfindung betrifft Stahlketten, wie sie insbesondere als hochfeste Lastketten verwendet werden.

**Stand der Technik**

Derartige Stahlketten werden zum Heben und Zurren großer Lasten unter allen Klimabedingungen eingesetzt. Sie müssen daher auch bei niedrigen Temperaturen eine hohe Belastbarkeit aufweisen. Gleichzeitig sollten die Kettenabmessangen so klein als möglich sein, um durch eine Gewichtseinsparung die Handhabung zu verbessern.

**Darstellung der Erfindung**

Der Erfindung liegt daher die Aufgabe zugrunde, Rundstahlketten zu schaffen, die im Tieftemperaturbereich eine ausreichende Belastbarkeit besitzen, um zu einer weiteren Gewichtseinsparung und damit einer verbesserten Handhabung zu gelangen.

Diese Aufgabe wird für eine Stahlkette der eingangs genannten Art dadurch gelöst, dass sie gereckt ist und eine auf den Nenndurchmesser bezogene Mindestbruchspannung von wenigstens 1200 N/mm$^2$ aufweist, und wobei eine ISO-V-Probe aus dem Stahl der Stahlkette bei einer Temperatur von -70 °C eine Rissauffangkraft von wenigstens 4 kN aufweist.

Als Nenndurchmesser wird der standardisierte Durchmesser der Stahlkette bezeichnet, beispielsweise ein Durchmesser aus der Reihe 6 mm, 8 mm, 10 mm, 13 mm oder 16 mm. Von diesem Durchmesser können die Hersteller in Einzelfällen im Bereich von -4 %/+8 % abweichen. So kann der tatsächliche Durchmesser einer Kette mit einem Nenndurchmesser von 10 mm beispielsweise im Bereich von 9,6 mm bis 10,8 mm betragen. Trotz dieser Abweichung vom Nenndurchmesser wird die Stahlkette vom Hersteller als Kette mit 10 mm Durchmesser bezeichnet.

Mit der erfindungsgemäßen Stahlkette lassen sich aufgrund der hohen Mindestbruchspannung die zum Tragen eines bestimmten Gewichts notwendigen Kettendurchmesser nochmals verringern. Durch die hohe Rissauffangkraft bei -70 °C ist sichergestellt, dass ein plötzlicher Bruch der Kette ohne vorherige Rissankündigung selbst bei sehr niedrigen Temperaturen nicht stattfindet.

Die Rissauffangkraft wird mit Hilfe eines instrumentierten Kerbschlagbiegeversuches ermittelt, bei dem die Kraft als Funktion der Zeit bei verschiedenen Temperaturen aufgenommen wird. Ist beim instrumentierten Kerbschlagbiegeversuch mit 300 J Fallenergie die Rissauffangkraft kleiner als 4 kN, bricht die Probe völlig spröde.

Ein Verfahren zur Bestimmung der Rissauffangkraft mittels eines Kerbschlagbiegeversuchs ist beispielsweise in dem Artikel "Anwendung des instrumentierten Kerbschlagbiegeversuchs zur Abschätzung der Rissauffangzähigkeit" in: Materialwissenschaft und Werkstofftechnik, Band 32, Heft 6, Seiten 539 bis 543, von K. Müller und G. Pusch beschrieben.

Bei handelsüblichen Ketten selbst der höchsten derzeit erhältlichen Güteklassen 8 und 10 wird eine solch hohe Rissauffangkraft lediglich bei wesentlich höheren Temperaturen zwischen -20°C und Raumtemperatur erreicht.

Die hohe Rissauffangkraft bei derartig niedrigen Temperaturen bei der erfindungsgemäßen Stahlkette kann durch eine Doppelhärtung weiter verbessert werden. Bei einer solchen Doppelhärtung wird die Stahlkette zweimal hintereinander auf Austenitisierungstemperatur gebracht, wobei die erste Temperatur höher als die zweite Temperatur ist. Die erste Austenitisierungstemperatur kann beispielsweise um höchstens 1.250° C, die zweite Austenitisierungstemperatur höchstens 950° C betragen. Zwischen beiden Austenitisierungsvorgängen wird die Kette im Flüssigkeitsbad auf ca. 20° C abgekühlt. Durch die zweite Austenitisierung lässt sich ein besonders feines Gefüge erreichen.

In einer weiteren vorteilhaften Ausgestaltung der Stahlkette erfüllt die Rissauffangkraft F in kN in Abhängigkeit von der Temperatur in °C folgende dimensionslose Ungleichung:

$$F \geq m \cdot T + b.$$

Dabei ist m eine dimensionslose Konstante mit einem Wert zwischen 0,3 und 0,4 und b eine ebenfalls dimensionslose Konstante mit einem Wert zwischen 29,5 und 30,5. Ein Verfahren zur Bestimmung der Rissauffangkraft F ist in dem oben genannten Artikel von Müller und Pusch beschrieben.

Ferner kann die Rissauffangkraft F wenigstens 7 kN bei einer Temperatur von -60° C betragen. In einer weiteren Ausgestaltung kann die Rissauffangkraft F bei einer Temperatur von -40° C wenigstens 13,5 kN betragen, und in einer ebenso vorteilhaften Ausgestaltung bei einer Temperatur von -20° C wenigstens 23,5 kN.

Bei derartigen Rissauffangkräften F ist sichergestellt, dass auch im Tieftemperaturbereich bei hoher Belastung der Kette kein Sprödbruch auftreten kann. Der Anwendungsbereich der Ketten wird erheblich in Richtung tieferer Temperaturen erweitert. Ein Einsatz der Ketten bis -90° C ist möglich.

Eine ausreichende Sicherheit der Kette bei tiefen Temperaturen lässt sich ferner erreichen, wenn die absorbierte Bruchenergie E in Nm für Ketten mit einem Nenndurchmesser D zwischen 6 mm und 16 mm wenigstens beträgt:

$$E = k_1 \cdot e^{k_2 \cdot D}.$$

Dabei ist $k_1$ eine dimensionslose Konstante mit einem Wert von wenigstens etwa 560 bis etwa 570, vorzugsweise mit einem Wert zwischen etwa 560 und 565, insbesondere zwischen etwa 562 und 563. Die Konstante $k_2$ ist ebenfalls dimensionslos und weist einen Wertebereich zwischen etwa 0,22 und 0,23, vorzugsweise zwischen etwa 0,225 bis etwa 0,23 auf.

Insbesondere kann die Stahlkette bei einem Nenndurchmesser von 10 mm eine absorbierte Bruchenergie E von wenigstens 6300 Joule und/oder bei einem Nenndurchmesser von 6 mm eine absorbierte Bruchenergie E von wenigstens 1950 Joule und/oder bei einem Nenndurchmesser von 8 mm eine absorbierte Bruchenergie von wenigstens 3300 Joule sowie bei einem Nenndurchmesser von 13 mm eine absorbierte Bruchenergie E von wenigstens 10200 Joule und/oder bei einem Durchmesser von 16 mm eine absorbierte Bruchenergie E von wenigstens 19600 Joule aufweisen.

Die Stahlkette ist gereckt. Bei dieser Ausgestaltung wurde die Stahlkette während ihrer Herstellung, vorzugsweise nach dem Vergüten, einer Reckzugkraft ausgesetzt, die wenigstens die Hälfte, insbesondere 62,5 % der Mindestbruchspannung, also 750 N/mm² bezogen auf den Nenndurchmesser beträgt. Durch das Recken wird erreicht, dass die fertige Kette bis in den Bereich der Reckzugkraft einen nahezu linearen Verlauf der Längung über die Kraft aufweist. Erst oberhalb der Reckzugkraft weicht die Spannungs-Dehnungs-Kurve vom linearen Verlauf ab und wird flacher.

Ein besonderes Problem bei Stahlketten bildet der Bereich, an dem die Kettenglieder miteinander stumpf verschweißt sind, da an dieser Stelle des Schweißwulstes durch eine Spannungskonzentration infolge einer Kerbwirkung eine erhöhte Bruchgefahr bei niedrigen Spannungen besteht. Um die Festigkeit des Stahls auszunutzen, weist die Stahlkette daher in einer vorteilhaften Ausgestaltung im Bereich der Stumpfschweißung einen Schweißwulst auf, der höchstens etwa das 1,06-fache des Durchmessers beträgt.

Der Durchmesser der erfindungsgemäßen Stahlketten kann zwischen 6 und 16 mm bei Rundstahlketten betragen.

Im Folgenden wird eine Ausführungsform der erfindungsgemäßen Stahlkette mit Bezug auf die beigefügten Zeichnungen beispielhaft erläutert.

## Kurze Beschreibung der Zeichnungen

Es zeigen:

Fig. 1    eine schematische Darstellung einer erfindungsgemäßen Stahlkette;

Fig. 2    eine schematische Darstellung der zur Herstellung der Kette verwendeten Verfahrensschritte;

Fig. 3    einen schematischen Verlauf der Rissauffangkraft über die Temperatur bei einer erfindungsgemäßen Stahlkette;

Fig. 4    den Verlauf der Kraft über die Zeit bei einem Kerbschlagbiegeversuch zur Ermittlung der Sprödbruchübergangstemperatur bei einer erfindungsgemäßen Stahlkette.

Fig. 5    den Verlauf der absorbierten Bruchenergie E für erfindungsgemäße Stahlketten mit verschiedenen Durchmessern.

## Wege zur Ausführung der Erfindung

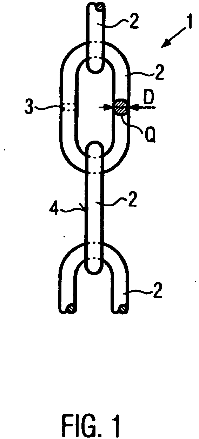

Figur 1 zeigt schematisch den Aufbau einer erfindungsgemäßen Stahlkette 1, beispielsweise einer Rundstahlkette.

Die Stahlkette 1 besteht aus einer Mehrzahl von Kettengliedern 2 mit einem im Wesentlichen kreisförmigen Querschnitt Q und einem Nenndurchmesser D von 6 mm, 8 mm, 10 mm, 13 mm, 16 mm, 18 mm, 20 mm oder 22 mm, wobei natürlich auch Zwischenstufen möglich sind. Der Nenndurchmesser ist standardisiert und wird von den Kettenherstellern zur Kennzeichnung ihrer Kette verwendet. Der tatsächliche Durchmesser der Stahlkette 1 kann von dem Wert des Nenndurchmessers etwas abweichen, beispielsweise um etwa - 4 %/+ 8 %.

Die Kettenglieder 2 sind durch eine Stumpfschweißstelle 3 geschlossen, wobei der Schweißwulst höchstens um 10 %, vorzugsweise höchstens 6 %, gegenüber dem Nenndurchmesser der Stahlkette 1 verdickt ist. Um eine ausreichende Oberflächenqualität zu der Stumpfschweißstelle 3 zu erlangen, wird nach dem Schweißen über den Schweißwulst gehobelt.

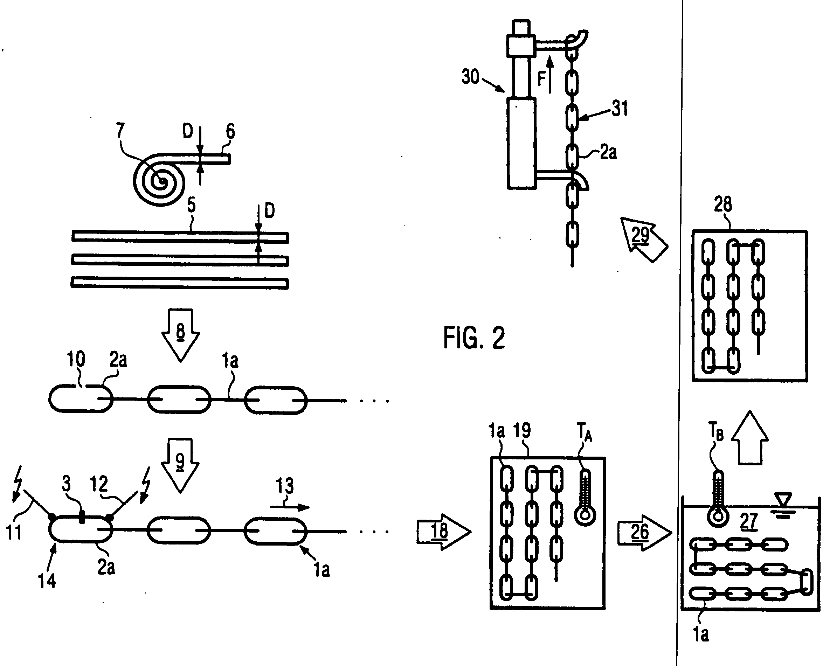

Die Stahlkette 1 der Figur 1 weist bezogen auf Ihren Nenndurchmesser eine Mindestbruchspannung von wenigstens 1200 N/mm$^2$ auf. Bei einer Temperatur von -70 °C beträgt die in einem instrumentierten Kerbschlagbiegeversuch ermittelte Rissauffangkraft F wenigstens 4 kN. Die Sprödbruchübergangstemperatur $T_{NDT}$ *(Nil Ductility Transition Temperature),* bei der die Rissauffangkraft die Grenze von 4 kN unterschreitet, beträgt unter - 70° C, vorzugsweise um etwa - 72° C. Die niedrigste Anwendungstemperatur liegt nach Versuchen und Berechnungen der Anmelderin ca. 20 K unter der Sprödbruchübergangstemperatur $T_{NDT}$. Diese Eigenschaften werden durch das schematisch in Figur 2 dargestellte Verfahren zur Herstellung der Stahlkette 1 erreicht.

Das Ausgangsmaterial für die Stahlkette ist Stangenmaterial 5 oder ein Draht 6 von einer Rolle 7 aus einem hochfesten Stahl, wie er beispielsweise weiter unten beschrieben ist. Das Stangenmaterial 5 oder der Draht 6 weisen bereits den Durchmesser D der fertigen Stahlkette 1 auf.

In einem ersten, schematisch durch den Pfeil 8 dargestellten Verfahrensschritt wird das Stangenmaterial 5 oder der Draht 6 kalt in Form eines offenen Kettengliedes 2a gebogen. Das offene Kettenglied 2a wird im Zuge des Biegevorganges in die entstehende Kette 1a eingehängt und an Ort und Stelle in einem weiteren Verfahrensschritt 9 an der offenen Stelle 10 stumpf verschweißt. Hierzu werden Elektroden 11, 12 in Kontakt mit dem zu verschweißenden, soeben geformten Kettenglied 2a in Kontakt gebracht und mit einem Schweißstrom beaufschlagt.

Die an der offenen Stelle 10 des Kettengliedes 2a einander gegenüberliegenden Stirnflächen heizen sich aufgrund des Schweißstromes auf Temperaturen geringfügig unterhalb der Schmelztemperatur auf und werden durch Stauchen stumpf verschweißt, so dass anstelle der offenen Stelle 10 die Stumpfschweißstelle 3 entsteht. Die Stumpfschweißstelle wird abgehobelt, um die Kerbwirkung zu minimieren. Anschließend wird die gerade hergestellte Kette 1a entlang der Transportrichtung 13 um ein Kettenglied weitertransportiert und ein neues Kettenglied am Ende 14 geschweißt.

Anschließend wird die noch unfertige Stahlkette 1a in einem nächsten Verfahrensschritt 18 in einem Härteofen 19 vorzugsweise zweimal hintereinander auf eine Austenitisierungstemperatur $T_A$ gebracht. Die erste Austenitisierungstemperatur beträgt dabei höchstens 1.250° C, die zweite Austenitisierungstemperatur höchstens 950° C. Durch den zweiten Schritt wird ein besonders feinkörniges Gefüge erreicht.

Nach jeder Austenitisierung wird die Stahlkette 1a in einem nachfolgenden Verfahrensschritt 26 in ein Flüssigkeitsbad 27, das auf einer Temperatur $T_B$ von etwa 20° C gehalten wird, eingetaucht.

Nach diesen Härten wird die Kette in einem Anlassofen 28 auf die Mindestbruchspannung von wenigstens 1200 N/mm$^2$ angelassen.

Im nächsten Verfahrensschritt 29 wird die Kette zu einer Reckeinrichtung 30 transportiert, wo ein Abschnitt 31 aus einer Mehrzahl von Kettengliedern 2a der wärmebehandelten Stahlkette 1 mit einer Reckzugkraft F gereckt wird, die einer Spannung von wenigstens 62,5 % der Mindestbruchspannung entspricht. Die Stahlkette 1a wird dabei abschnittsweise jeweils so gereckt, dass jedes Kettenglied 2a genau einmal der Reckkraft F ausgesetzt ist. Die Stahlkette 1 weist somit bis in den Bereich der Reckzugkraft F einen nahezu linearen Verlauf des Spannungs-Dehnungs-Diagramms auf.

Der Stahl, aus dem die Stahlketten 1 mit dem in Figur 2 hergestellten Verfahren erzeugt werden, kann insbesondere folgende Zusammensetzung in Gew.-% aufweisen:

|     |     |
|-----|-----|
| C:  | 0,08 - 0,25 Gew.-%, insbesondere 0,16 - 0,23 Gew.-%; |
| Si: | 0,10 - 0,30 Gew.-%; |
| Mn: | 0,80 - 1.60 Gew.-%, insbesondere 1,00 - 1,35 Gew.-%; |
| P:  | ≤ 0,020 Gew.-%; |
| S:  | ≤ 0,015 Gew.-%; |
| Cr: | 0,40 - 0,80 Gew.-%, insbesondere 0,40 - 0,65 Gew.-%; |
| Mo: | 0,30 - 0,50 Gew.-%, insbesondere 0,35 - 0,50 Gew.-%; |
| Ni: | 0,70-1,20 Gew.-%, insbesondere 0,75 -1,00 Gew.-%; |
| Al: | 0,020 - 0,060 Gew.-%, insbesondere 0,020 - 0,045 Gew.-%; |
| N:  | 0,007 - 0,018 Gew.-%, insbesondere 0,007 - 0,0015 Gew.-%; |
| V:  | ≤ 0,15 Gew.-%; |

(fortgesetzt)

Nb:        ≤ 0,07 Gew.-%.

Die Summe aus P- und S-Gehalt sollte bei diesem Stahl kleiner als 0,030 Gew.-% und die Summe aus V- und Nb-Gehalt größer als oder gleich 0,020 Gew.-% sein. Der Rest des Stahles kann aus Eisen und unvermeidbaren Verunreinigungen bestehen.

Dieser Stahl wurde mit dem mit Bezug auf die Fig. 2 beschriebenen Verfahren zu jeweils einer Rundstahlkette 6 x 18, 8 x 24, 10 x 30, 13 x 39 und 16 x 48 verarbeitet; die erste Ziffer bezeichnet den Nenndurchmesser in mm, die zweite Ziffer die Teilung in mm. Die Reckzugkraft wurde so eingestellt, dass jeweils 62,5 % der Mindestbruchspannung in der Kette erreicht wurden.

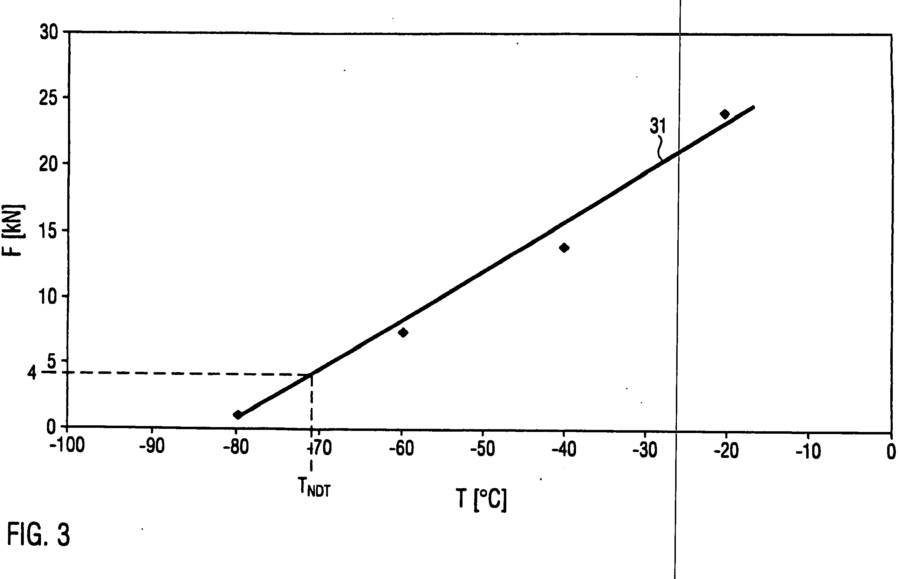

Figur 3 zeigt beispielhaft den Verlauf der Rissauffangkraft F in kN über die Temperatur T in °C bei Kerbschlagbiegeproben (ISO-V-Proben), welche einer aus dem oben genannten Stahl gefertigten Rundstahlkette mit einem Nenndurchmesser von 13 mm entnommen wurden.

Wie zu erkennen ist, erreichte in dem Versuch die Rundstahlkette 1 bei einer Temperatur von -60°C eine Rissauffangkraft F von wenigstens 7 kN, bei einer Temperatur von - 40°C eine Rissauffangkraft F von wenigstens 13,5 kN und eine Rissauffangkraft F von wenigstens 23,5 kN bei einer Temperatur von -20°C. Die Sprödbruchübergangstemperatur $T_{NDT}$ *(Nil Ductility Transition Temperature)* betrug -72°C. Bei dieser Temperatur wurde die für dieses Testverfahren geforderte Rissauffangkraft von 4 kN erreicht.

Die Rissauffangkraft F in kN liegt in etwa oberhalb einer Geraden 31, welche folgende dimensionslose Ungleichung erfüllt:

$$F \geq m \cdot T + b.$$

Dabei ist T die Temperatur der Kerbschlagbiegeprobe in °C, m eine dimensionslose Konstante mit einem Wert zwischen 0,3 und 0,4 und b eine ebenfalls dimensionslose Konstante mit einem Wert zwischen 29,5 und 30,5.

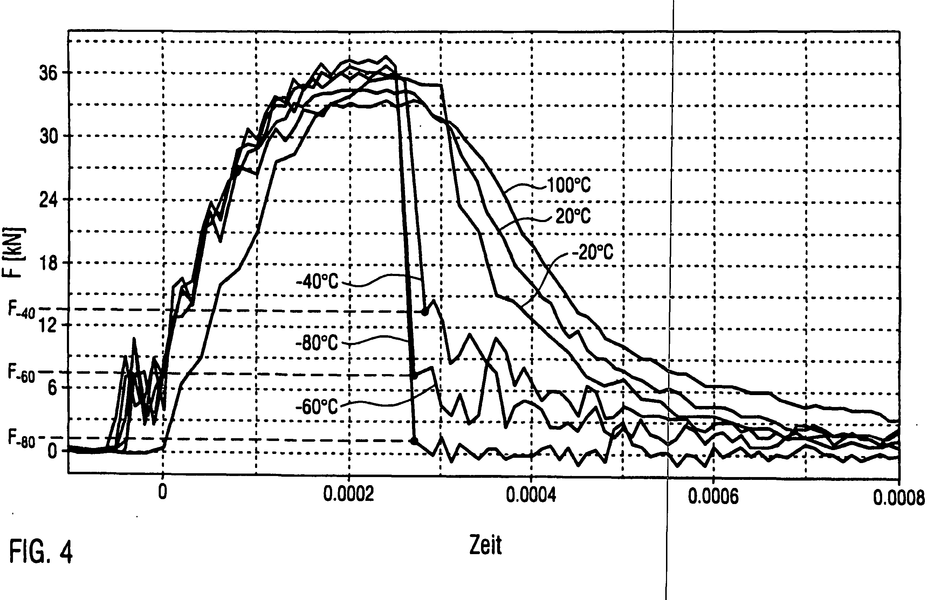

Der Verlauf der Rissauffangkraft F wurde dabei mit Hilfe eines instrumentierten Kerbschlagversuchs bei verschiedenen Temperaturen für die oben genannten Stahlketten durchgeführt. Fig. 4 zeigt beispielhaft den Verlauf der Kraft über die Zeit bei Kerbschlagbiegeversuchen mit verschiedenen Temperaturen für die Stahlkette 13 x 39.

Wie zu erkennen ist, stellt sich beim Übergang von einer Temperatur von - 20° C auf - 40° C ein steiler Abfall im Kraftverlauf bei ca. 0,00025 sek. ein. Dieser Kraftverlauf kennzeichnet den beginnenden Sprödbruch der Probe bei tiefen Temperaturen. Als Rissauffangtemperatur wird diejenige Kraft bezeichnet, ab der der Verlauf der Kraft über die Zeit wieder flacher verläuft. In Fig. 4 sind beispielsweise die Rissauffangkräfte F in kN für - 40° C, $F_{-40}$, für - 60° C, $F_{-60}$, und -80 ° C, $F_{-80}$, angezeigt. Die Zusammenstellung dieser Rissauffangkräfte führt zu der schematischen Darstellung der Fig. 3.

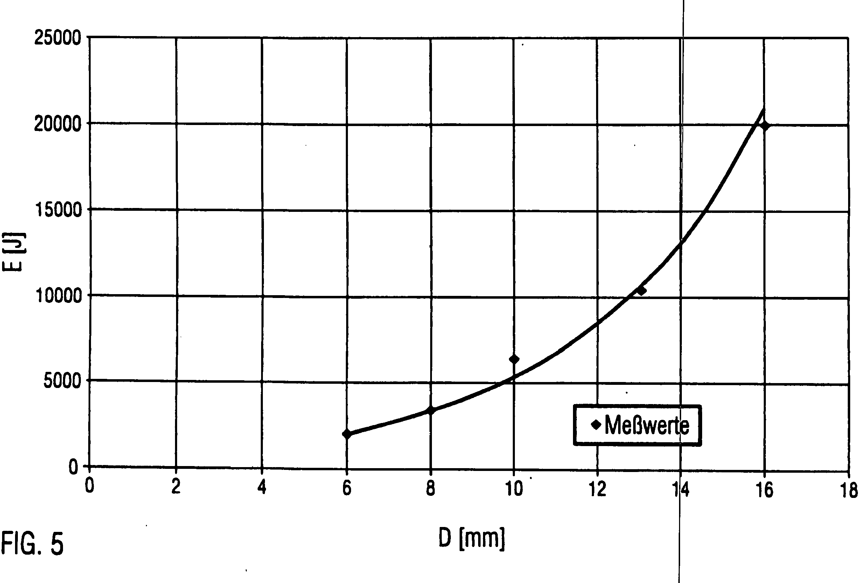

In Fig. 5 ist die absorbierte Bruchenergie E in Abhängigkeit vom Nenndurchmesser der Kette für die oben genannten, versuchsweise hergestellten Stahlketten aufgetragen. Wie zu erkennen ist, steigt die absorbierte Bruchenergie E in Joule in Abhängigkeit vom Durchmesser D in etwa .exponentiell an. Es ergibt sich aus den Versuchen, dass die absorbierte Bruchenergie E in Abhängigkeit vom Durchmesser wenigstens

$$E = k_1 \cdot e^{k_2 \cdot D},$$

beträgt, wobei $k_1$ mit einem Wert von wenigstens etwa 560 und höchstens 570, vorzugsweise zwischen etwa 560 und 565, weiter bevorzugt zwischen etwa 562 und 563. $k_2$ ist eine ebenfalls dimensionslose Konstante mit einem Wert von wenigstens etwa 0,22 und höchstens etwa 0,23 ist. Vorzugsweise beträgt $k_1$ zwischen etwa 562,73 und etwa 562,75 und $k_2$ zwischen etwa 0,225 bis etwa 0,23.

Insbesondere betrug die absorbierte Bruchenergie für die Stahlkette mit einem Nenndurchmesser von 6 mm etwa 2000 Joule für die Stahlkette mit dem Nenndurchmesser von 8 mm etwa 3400 Joule, für die Stahlkette mit dem Nenndurchmesser von 10 mm etwa 6400 Joule, für die Stahlkette mit dem Nenndurchmesser von 13 mm etwa 10400 Joule und für die Stahlkette mit dem Nenndurchmesser von 16 mm etwa 19900 Joule.

**Patentansprüche**

**1.**   Stahlkette (1), insbesondere zum Heben und Zurren von Lasten, **dadurch gekennzeichnet , dass** die Stahlkette (1) gereckt ist und eine auf den Nenndurchmesser bezogene Mindestbruchspannung von wenigstens 1200 N/mm$^2$ aufweist, und wobei eine ISO-V-Probe aus dem Stahl der Stahlkette eine Rissauffangkraft von wenigstens 4 kN bei einer Temperatur von -70°C aufweist.

**2.** Stahlkette (1) nach Anspruch 1, **gekennzeichnet durch** eine Rissauffangkraft F in kN, die in Abhängigkeit von der Temperatur T in °C folgende dimensionslose Ungleichung erfüllt:

$$F \geq m \cdot T + b,$$

wobei m eine dimensionslose Konstante mit einem Wert zwischen 0,3 und 0,4 und b eine dimensionslose Konstante mit einem Wert zwischen 29,5 und 30,5 ist.

**3.** Stahlkette (1) nach Anspruch 1 oder 2, **gekennzeichnet durch** eine Rissauffangkraft F von wenigstens 7 kN bei einer Temperatur von -60°C.

**4.** Stahlkette (1) nach einem der oben genannten Ansprüche, **gekennzeichnet durch** eine Rissauffangkraft F von wenigstens 13,5 kN bei einer Temperatur von -40°C.

**5.** Stahlkette (1) nach einem der oben genannten Ansprüche, **gekennzeichnet durch** eine Rissauffangkraft F von wenigstens 23,5 kN bei einer Temperatur von -20°C.

**6.** Stahlkette (1) nach einem der oben genannten Ansprüche, **dadurch gekennzeichnet, dass** die Stahlkette eine absorbierte Bruchenergie E in Nm aufweist, wenigstens beträgt:

$$E = k_1 \cdot e^{k_2 \cdot D},$$

wobei D der dimensionslose Nenndurchmesser der Stahlkette in mm, $k_1$ eine dimensionslose Konstante mit einem Wert zwischen 560 und 565 und $k_2$ eine dimensionslose Konstante mit einem Wert zwischen 0,22 und 0,23 ist.

**7.** Stahlkette (1) nach Anspruch 6, **dadurch gekennzeichnet, dass** $k_1$ zwischen 562 und 563 beträgt.

**8.** Stahlkette (1) nach Anspruch 6 oder 7, **dadurch gekennzeichnet, dass** $k_2$ zwischen 0,225 und 0,23 beträgt.

**9.** Stahlkette (1) nach einem der oben genannten Ansprüche, **dadurch gekennzeichnet, dass** die Stahlkette (1) bei einem Nenndurchmesser von 10 mm eine absorbierte Bruchenergie E von wenigstens 6300 J aufweist.

**10.** Stahlkette (1) nach einem der oben genannten Ansprüche, **dadurch gekennzeichnet, dass** die Stahlkette (1) bei einem Nenndurchmesser von 6 mm eine absorbierte Bruchenergie E von wenigstens 1950 J aufweist.

**11.** Stahlkette (1) nach einem der oben genannten Ansprüche, **dadurch gekennzeichnet, dass** die Stahlkette (1) bei einem Nenndurchmesser von 8 mm eine absorbierte Bruchenergie E von wenigstens 3300 J aufweist.

**12.** Stahlkette (1) nach einem der oben genannten Ansprüche, **dadurch gekennzeichnet, dass** die Stahlkette (1) bei einem Nenndurchmesser von 13 mm eine absorbierte Bruchenergie E von wenigstens 10200 J aufweist.

**13.** Stahlkette (1) nach einem der oben genannten Ansprüche, **dadurch gekennzeichnet, dass** die Stahlkette (1) bei einem Durchmesser von 16 mm eine absorbierte Bruchenergie E von wenigstens 19600 J aufweist.

**14.** Stahlkette (1) nach einem der oben genannten Ansprüche, **dadurch gekennzeichnet, dass** die Stahlkette (1) vergütet ist.

**15.** Stahlkette (1) nach einem der oben genannten Ansprüche, **dadurch gekennzeichnet, dass** die Stahlkette (1) einen im Wesentlichen geradlinigen Verlauf der Dehnung über die Spannung bis zu wenigstens 62,5 % der Mindestbruchspannung aufweist.

**16.** Stahlkette (1) nach einem der oben genannten Ansprüche, **dadurch gekennzeichnet, dass** die Stahlkette (1) eine Sprödbruchübergangstemperatur $T_{NDT}$ von unterhalb -71 ° C aufweist.

**17.** Stahlkette (1) nach einem der oben genannten Ansprüche, **dadurch gekennzeichnet, dass** im Bereich der Stumpfverschweißung (3) der Durchmesser der Stahlkette (1) höchstens das 1,06-fache des Nenndurchmessers beträgt.

**18.** Verfahren zum Herstellen einer Stahlkette (1), bei dem Ausgangsmaterial (5, 6) aus Stahl zu Kettengliedern (2) kaltverformt und aus den Kettengliedern (2) die Stahlkette (1) gebildet wird, wobei die Stahlkette gereckt wird, **dadurch gekennzeichnet, dass** als Stahl ein Stahl enthaltend

| | |
|---|---|
| C: | 0,08 - 0,25 Gew.-%, |
| Si: | 0,10 - 0,30 Gew.-%, |
| Mn: | 0,80 - 1.60 Gew.-%, |
| P: | $\leq$ 0,020 Gew.-%, |
| S: | $\leq$ 0,015 Gew.-%, |
| Cr: | 0,40 - 0,80 Gew.-%, |
| Mo: | 0,30 - 0,50 Gew.-%, |
| Ni: | 0,70 - 1,20 Gew.-%, |
| Al: | 0,020 - 0,060 Gew.-%, |
| N: | 0,007 - 0,018 Gew.-%, |
| V: | $\leq$ 0,15 Gew.-%, |
| Nb: | $\leq$ 0,07 Gew.-% |

verwendet wird, wobei die Summe aus P- und S-Gehalt bei diesem Stahl kleiner als 0,030 Gew.-% und die Summe aus V- und Nb-Gehalt größer als oder gleich 0,020 Gew.-% ist, der Rest ist Eisen und unvermeidbare Verunreinigung.

**19.** Verfahren nach Anspruch 18, **dadurch gekennzeichnet, dass** die Stahlkette (1) vergütet wird.

**20.** Verfahren nach Anspruch 18 oder 19, **dadurch gekennzeichnet, dass** die Stahlkette (1) nach dem Vergüten gereckt wird.

**21.** Verfahren nach einem der Ansprüche 18 bis 20, **dadurch gekennzeichnet, dass** die Stahlkette (1) doppelt gehärtet wird.

**22.** Stahlkette (1) erhältlich durch Kaltverformen eines Stahls enthaltend

| | |
|---|---|
| C: | 0,08 - 0,25 Gew.-%, insbesondere 0,16 - 0,23 Gew.-%; |
| Si: | 0,10 -0,30 Gew.-%; |
| Mn: | 0,80 - 1.60 Gew.-%, insbesondere 1,00 - 1,35 Gew.-%; |
| P: | $\leq$ 0,020 Gew.-%; |
| S: | $\leq$ 0,015 Gew.-%; |
| Cr: | 0,40 - 0,80 Gew.-%, insbesondere 0,40 - 0,65 Gew.-%; |
| Mo: | 0,30 - 0,50 Gew.-%, insbesondere 0,35 - 0,50 Gew.-%; |
| Ni: | 0,70 - 1,20 Gew.-%, insbesondere 0,75 - 1,00 Gew.-%; |
| Al: | 0,020 - 0,060 Gew.-%, insbesondere 0,020 - 0,045 Gew.-%; |
| N: | 0,007 - 0,018 Gew.-%, insbesondere 0,007 - 0,0015 Gew.-%; |
| V: | $\leq$ 0,15 Gew.-%; |
| Nb: | $\leq$ 0,07 Gew.-% |

zu Kettengliedern, Stumpfverschweißen der Kettenglieder zur Bildung der Stahlkette (1), Vergüten und Recken der Stahlkette (1).

**23.** Stahlkette (1) nach Anspruch 22, **gekennzeichnet durch** ein Doppelhärten während des Vergütens.

**Claims**

1. Steel chain (1), in particular for lifting and lashing loads, **characterised in that** the steel chain (1) is stretched and has a minimum breaking stress relative to the nominal diameter of at least 1200 N/mm$^2$, and an ISO-V sample of the steel of the steel chain has a crack-arrest force of at least 4 kN at a temperature of -70°C.

2. Steel chain (1) as claimed in claim 1, **characterised by** a crack-arrest force F in kN which satisfies the following dimensionless inequality as a function of the temperature T in °C:

$$F \geq m \cdot T + b$$

where m is a dimensionless constant with a value of between 0.3 and 0.4 and b is a dimensionless constant with a value of between 29.5 and 30.5.

3. Steel chain (1) as claimed in claim 1 or 2, **characterised by** a crack-arrest force F of at least 7 kN at a temperature of -60°C.

4. Steel chain (1) as claimed in one of the preceding claims, **characterised by** a crack-arrest force F of at least 13.5 kN at a temperature of -40°C.

5. Steel chain (1) as claimed in one of the preceding claims, **characterised by** a crack-arrest force F of at least 23.5 kN at a temperature of -20°C.

6. Steel chain (1) as claimed in one of the preceding claims, **characterised in that** the steel chain has an absorbed fracture energy E in Nm which is at least:

$$E = k_1 \cdot e^{k_2 \cdot D},$$

where D is the dimensionless nominal diameter of the steel chain in mm, $k_1$ is a dimensionless constant with a value of between 560 and 565 and $k_2$ is a dimensionless constant with a value of between 0.22 and 0.23.

7. Steel chain (1) as claimed in claim 6, **characterised in that** $k_1$ is between 562 and 563.

8. Steel chain (1) as claimed in claim 6 or 7, **characterised in that** $k_2$ is between 0.225 and 0.23.

9. Steel chain (1) as claimed in one of the preceding claims, **characterised in that** the steel chain (1) has an absorbed fracture energy E of at least 6300 J for a nominal diameter of 10 mm.

10. Steel chain (1) as claimed in one of the preceding claims, **characterised in that** the steel chain (1) has an absorbed fracture energy E of at least 1950 J for a nominal diameter of 6 mm.

11. Steel chain (1) as claimed in one of the preceding claims, **characterised in that** the steel chain (1) has an absorbed fracture energy E of at least 3300 J for a nominal diameter of 8 mm.

12. Steel chain (1) as claimed in one of the preceding claims, **characterised in that** the steel chain (1) has an absorbed fracture energy E of at least 10200 J for a nominal diameter of 13 mm.

13. Steel chain (1) as claimed in one of the preceding claims, **characterised in that** the steel chain (1) has an absorbed fracture energy E of at least 19600 J for a nominal diameter of 16 mm.

14. Steel chain (1) as claimed in one of the preceding claims, **characterised in that** the steel chain (1) is tempered.

15. Steel chain (1) as claimed in one of the preceding claims, **characterised in that** the steel chain (1) has an essentially straight strain over stress curve up to at least 62.5% of the minimum breaking stress.

**16.** Steel chain (1) as claimed in one of the preceding claims, **characterised in that** the steel chain (1) has a Nil Ductility Transition Temperature $T_{NDT}$ of less than -71°C.

**17.** Steel chain (1) as claimed in one of the preceding claims, **characterised in that** the diameter of the steel chain (1) in the region of the butt joint (3) is at most 1.06 times the nominal diameter.

**18.** Method of producing a steel chain (1), whereby starting material (5, 6) comprising steel is cold formed to obtain chain links (2) and the steel chain (1) is produced from the chain links (2), and the steel chain is stretched, **characterised in that** a steel containing

| | |
|---|---|
| C: | 0.08 - 0.25 % by weight, |
| Si: | 0.10 - 0.30 % by weight, |
| Mn: | 0.80 - 1.60 % by weight, |
| P: | $\leq$ 0.020 % by weight, |
| S: | $\leq$ 0.015 % by weight, |
| Cr: | 0.40 - 0.80 % by weight, |
| Mo: | 0.30 - 0.50 % by weight, |
| Ni: | 0.70 - 1.20 % by weight, |
| Al: | 0.020 - 0.060 % by weight, |
| N: | 0.007 - 0.018 % by weight, |
| V: | $\leq$ 0.15 % by weight, |
| Nb: | $\leq$ 0.07 % by weight, |

is used as the steel, and the sum of P-content and S-content in this steel is less than 0.030 % by weight and the sum of V-content and Nb-content is greater than or equal to 0.020 % by weight, the rest being iron and unavoidable impurities.

**19.** Method as claimed in claim 18, **characterised in that** the steel chain (1) is tempered.

**20.** Method as claimed in claim 18 or 19, **characterised in that** the steel chain (1) is stretched after tempering.

**21.** Method as claimed in one of claims 18 to 20, **characterised in that** the steel chain (1) is hardened twice.

**22.** Steel chain (1) obtained by cold forming a steel
containing

| | |
|---|---|
| C: | 0.08 - 0.25 % by weight, in particular 0.16 - 0. 23 % by weight, |
| Si: | 0.10 - 0.30 % by weight, |
| Mn: | 0.80 - 1.60 % by weight, in particular 1.00 - 1.35 % by weight, |
| P: | $\leq$ 0.020 % by weight, |
| S: | $\leq$ 0.015 % by weight, |
| Cr: | 0.40 - 0.80 % by weight, in particular 0. 40 - 0. 65 % by weight, |
| Mo: | 0.30 - 0.50 % by weight, in particular 0.35 - 0.50 % by weight, |
| Ni: | 0.70 - 1. 20 % by weight, in particular 0.75 - 1.00 % by weight, |
| Al: | 0.020 - 0.060 % by weight, in particular 0.020 - 0.045 % by weight, |
| N: | 0.007 - 0.018 % by weight, in particular 0.007 - 0.0015 % by weight, |
| V: | $\leq$ 0.15 % by weight, |
| Nb: | $\leq$ 0.07 % by weight, |

to obtain chain links, butt welding the chain links to form the steel chain (1), tempering and stretching the steel chain (1).

**23.** Steel chain (1) as claimed in claim 22, **characterised by** a double hardening process during tempering.

**Revendications**

1. Chaîne en acier (1), en particulier pour soulever et amarrer des charges, **caractérisée en ce que** la chaîne en acier (1) est étirée et présente une contrainte de rupture minimale, par rapport au diamètre nominal, d'au moins 1200 $N/mm^2$ et étant précisé qu'un échantillon ISO à entaille V de l'acier de ladite chaîne présente une force d'arrêt de déchirure d'au moins 4 kN à une température de -70°C.

2. Chaîne en acier (1) selon la revendication 1, **caractérisée par** une force d'arrêt de déchirure F, en kN, qui, en fonction de la température T en °C, répond à l'inéquation sans dimension suivante :

$$F \geq m \cdot T + b,$$

étant précisé que m désigne une constante sans dimension d'une valeur située entre 0,3 et 0,4, et b une constante sans dimension d'une valeur située entre 29,5 et 30,5.

3. Chaîne en acier (1) selon la revendication 1 ou 2, **caractérisée par** une force d'arrêt de déchirure F d'au moins 7 kN à une température de -60°C.

4. Chaîne en acier (1) selon l'une des revendications précédentes, **caractérisée par** une force d'arrêt de déchirure F d'au moins 13,5 kN à une température de -40°C.

5. Chaîne en acier (1) selon l'une des revendications précédentes, **caractérisée par** une force d'arrêt de rupture F d'au moins 23,5 kN à une température de -20°C.

6. Chaîne en acier (1) selon l'une des revendications précédentes, **caractérisée en ce que** la chaîne en acier présente une énergie de rupture absorbée E, en Nm, d'au moins :

$$E = k_1 \cdot e^{k_2 \cdot D},$$

étant précisé que D désigne le diamètre nominal sans dimension de la chaîne en acier en mm, $k_1$ une constante sans dimension d'une valeur située entre 560 et 565, et $k_2$ une constante sans dimension d'une valeur située entre 0,22 et 0,23.

7. Chaîne en acier (1) selon la revendication 6, **caractérisée en ce que** $k_1$ est situé entre 562 et 563.

8. Chaîne en acier (1) selon la revendication 6 ou 7, **caractérisée en ce que** $k_2$ est situé entre 0,225 et 0,23.

9. Chaîne en acier (1) selon l'une des revendications précédentes, **caractérisée en ce que** la chaîne en acier (1), pour un diamètre nominal de 10 mm, présente une énergie de rupture absorbée E d'au moins 6300 J.

10. Chaîne en acier (1) selon l'une des revendications précédentes, **caractérisée en ce que** la chaîne en acier, pour un diamètre nominal de 6 mm, présente une énergie de rupture absorbée E d'au moins 1950 J.

11. Chaîne en acier (1) selon l'une des revendications précédentes, **caractérisée en ce que** la chaîne en acier (1), pour un diamètre nominal de 8 mm, présente une énergie de rupture absorbée E d'au moins 3300 J.

12. Chaîne en acier (1) selon l'une des revendications précédentes, **caractérisée en ce que** la chaîne en acier (1), pour un diamètre nominal de 13 mm, présente une énergie de rupture absorbée E d'au moins 10200 J.

13. Chaîne en acier (1) selon l'une des revendications précédentes, **caractérisée en ce que** la chaîne en acier (1), pour un diamètre nominal de 16 mm, présente une énergie de rupture absorbée E d'au moins 19600 J.

14. Chaîne en acier (1) selon l'une des revendications précédentes, **caractérisée en ce que** la chaîne en acier (1) est traitée par trempe et revenu.

**15.** Chaîne en acier (1) selon l'une des revendications précédentes, **caractérisée en ce que** la chaîne en acier (1) présente une courbe globalement droite de l'allongement sur la contrainte jusqu'à au moins 62,5 % de la contrainte de rupture minimale.

**16.** Chaîne en acier (1) selon l'une des revendications précédentes, **caractérisée en ce que** la chaîne en acier (1) présente une température de transition ductile-fragile $T_{NDT}$ inférieure à -71°C.

**17.** Chaîne en acier (1) selon l'une des revendications précédentes, **caractérisée en ce que** dans la zone de la soudure bout à bout (3), le diamètre de la chaîne en acier (1) est égal au maximum à 1,06 fois le diamètre nominal.

**18.** Procédé pour fabriquer une chaîne en acier (1), selon lequel un matériau de départ (5, 6) en métal est déformé à froid pour former des maillons (2), et la chaîne en acier (1) est formée à partir des maillons (2), étant précisé que la chaîne en acier est étirée, **caractérisé en ce qu'**on utilise comme acier un acier contenant

| | |
|---|---|
| C : | 0,08-0,25 % en poids, |
| Si : | 0,10-0,30% en poids, |
| Mn : | 0,80-1,60 % en poids, |
| P : | ≤ 0,020 % en poids, |
| S : | ≤ 0,015 % en poids, |
| Cr : | 0,40-0,80 % en poids, |
| Mo : | 0,30-0,50 % en poids, |
| Ni : | 0,70-1,20 % en poids, |
| Al : | 0,020-0,060 % en poids, |
| N : | 0,007-0,018 % en poids, |
| V : | ≤ 0,15 % en poids, |
| Nb : | ≤ 0,07 % en poids, |

étant précisé que la somme des teneurs en P et S pour cet acier est inférieure à 0,030 % en poids et que la somme des teneurs en V et Nb est supérieure ou égale à 0,020 % en poids, le reste étant constitué par du fer et des impuretés inévitables.

**19.** Procédé selon la revendication 18, **caractérisé en ce que** la chaîne en acier (1) est traitée par trempe et revenu.

**20.** Procédé selon la revendication 18 ou 19, **caractérisé en ce que** la chaîne en acier (1), après le traitement par trempe et revenu, est étirée.

**21.** Procédé selon l'une des revendications 18 à 20, **caractérisé en ce que** la chaîne en acier (1) est durcie deux fois.

**22.** Chaîne en acier (1) pouvant être obtenue par
déformation à froid d'un acier contenant

| | |
|---|---|
| C : | 0,08-0,25 % en poids, en particulier 0,16-0,23 % en poids, |
| Si : | 0,10-0,30% en poids, |
| Mn : | 0,80-1,60 % en poids, en particulier 1,0-1,35 % en poids |
| P : | ≤ 0,020 % en poids, |
| S : | ≤ 0,015 % en poids, |
| Cr : | 0,40-0,80 % en poids, en particulier 0,40-0,65 % en poids, |
| Mo : | 0,30-0,50 % en poids, en particulier 0,35-0,50 % en poids, |
| Ni : | 0,70-1,20 % en poids, en particulier 0,75-1,00 % en poids, |
| Al : | 0,020-0,060 % en poids, en particulier 0,020-0,045 % en poids, |
| N : | 0,007-0,018 % en poids, en particulier 0,007-0,0015 % en poids, |
| V : | ≤ 0,15 % en poids, |
| Nb : | ≤ 0,07 % en poids, |

pour former des maillons, par soudage bout à bout des maillons pour former la chaîne en acier (1), par trempe et revenu, et par étirage de la chaîne en acier (1).

23. Chaîne en acier (1) selon la revendication 22, **caractérisée par** un double durcissement pendant la trempe et le revenu.

FIG. 1

FIG. 2

EP 1 802 894 B1

FIG. 3

EP 1 802 894 B1

FIG. 4

EP 1 802 894 B1

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. MÜLLER ; G. PUSCH.** Anwendung des instrumentierten Kerbschlagbiegeversuchs zur Abschätzung der Rissauffangzähigkeit. *Materialwissenschaft und Werkstofftechnik,* vol. 32 (6), 539-543